(19) Europäisches Patentamt

European Patent Office

Office européen des brevets

(11) **EP 0 794 513 B1**

(12) **EUROPEAN PATENT SPECIFICATION**

(45) Date of publication and mention
of the grant of the patent:
**04.12.2002 Bulletin 2002/49**

(51) Int Cl.[7]: **G06T 5/40**, G06T 5/20

(21) Application number: **97301506.8**

(22) Date of filing: **06.03.1997**

(54) **Method and circuit for image enhancement using quantized mean-separate histogram equalization**

Verfahren und Schaltungsanordnung zur Bildverbesserung durch verteilten Histogrammausgleich mit Hilfe einer quantisierten mittleren Bildhelligkeit

Procédé et circuit d'amélioration d'image en utilisant une égalisation indépendante d'histogramme à l'aide d'une lumincance moyenne quantifiée

(84) Designated Contracting States:
**DE ES GB**

(30) Priority: **09.03.1996 KR 9606220**

(43) Date of publication of application:
**10.09.1997 Bulletin 1997/37**

(73) Proprietor: **Samsung Electronics Co., Ltd.**
**Suwon City, Kyungki-do (KR)**

(72) Inventor: **Kim, Young-taek**
**Paldal-gu, Suwon-city, Kyungki-do (KR)**

(74) Representative: **Chugg, David John**
**Appleyard Lees,**
**15 Clare Road**
**Halifax, West Yorkshire HX1 2HY (GB)**

(56) References cited:
**EP-A- 0 383 269    EP-A- 0 603 908**
**GB-A- 2 281 674**

**Description**

The present invention relates to a method for enhancing image using quantized mean-separate histogram equalization (MSHE) and a circuit therefor, and more particularly, to a method in which the input image signals are quantized and split into a predetermined number of sub-images, and then each sub-image is independently histogram-equalized and a circuit therefor.

The histogram of gray levels provides the whole description of the appearance of an image. The properly adjusted gray levels for a given image, enhances the appearance or the contrast of the image.

Among the various types of methods used for enhancing the contrast, histogram-equalization which enhances the contrast of a given image according to the sample distribution of the image is most widely known and disclosed in the following documents [1] and [2]: [1] J.S. Lim, "Two-Dimensional Signal and Image Processing", Prentice Hall, Englewood Cliffs, New Jersey, 1990; and [2] R.C. Gonzales and P. Wints, "Digital Image Processing", Addition-Wesley, Reading, Massachusetts, 1977.

In addition, such useful applications of the histogram-equalization method including a medical image processing and a radar image processing are disclosed in the following documents [3] and [4]: [3] J. Zimmerman, S. Pizer, E. Staab, E. Perry, W. McCartney and B. Breton, "Evaluation of the Effectiveness of Adaptive Histogram Equalization for Contrast Enhancement," IEEE Tr. on Medical Imaging, pp.304-312, Dec. 1988; and [4] Y. Li, W. Wang and D.Y. Yu, "Application of Adaptive Histogram Equalization to X-ray Chest Image," Proc. of the SPIE, pp.513-514, vol.2321, 1994.

GB-A-2 281 674 teaches histogram equalization on a whole input image by using a "coarse grained" or "quantized" cumulative histogram, i.e. the cumulative histogram is prepared for 8 quantized brightness levels corresponding to the 3 upper bits of a 6 bit number encoding 6 bit grayscale levels. The values of the cumulative histogram for other brightness levels are interpolated: cf. Figs. 7 and 8. The document does not teach splitting the input image into sub-images according to a splitting of a quantized gray level distribution based on a quantized mean gray level and separately performing histogram equalization on these sub-images.

Generally, since the histogram equalization stretches the dynamic range, the distribution density of the resultant image is made uniform. As a result, the contrast of the image is enhanced.

This widely known characteristic of the histogram equalization would be a defect in some cases. That is, because the output density of the histogram equalization is uniform, the mean brightness of an output image is near the middle of the gray level range.

Actually for the histogram equalization of an analog image, the mean brightness of the output image due to the histogram equalization is the middle gray level regardless of the mean brightness of the input image. Apparently, this characteristic is undesirable for some applications. For instance, the fact that the image taken in the night looks like the image taken in the daytime after the histogram equalization is a problem.

In addition, because the conventional histogram equalizer requires the storage of every occurrence number of each gray level, the cost for hardware is high. For example, if 256 gray levels (L) are used, 256 memory devices are required for storing the occurrence numbers of all levels, and 256 accumulators are required for accumulating every occurrence number of each level.

The present invention is defined by the appended claims.

To attempt to overcome the above problem, it is an aim of embodiments of the present invention to provide a method for enhancing image in which the level of an input image signal is quantized, and split into a predetermined number of sub-images and then each sub-image is independently histogram-equalized, thereby enhancing the contrast.

It is another aim of embodiments of the present invention to provide a circuit for enhancing image which quantizes the level of an input image signal, splits the quantized input image signals into a predetermined number of sub-images, and independently histogram-equalizes each sub-image, thereby reducing the hardware.

For a better understanding of the invention, and to show how embodiments of the same may be carried into effect, reference will now be made, by way of example, to the accompanying diagrammatic drawings, in which:

Figure 1 is a view illustrating an example of quantizing L level discrete signals to Q level discrete signals according to a method of the present invention;

Figure 2 illustrates the concept of interpolation adopted in embodiments of the present invention; and

Figure 3 is a block diagram of a circuit for enhancing image according to an embodiment of the present invention.

First of all, the quantized mean-separate histogram equalization (MSHE) method proposed in the present invention will be described.

A given image $\{X\}$ is composed of L discrete gray levels $\{X_0, X_1,..., X_{L-1}\}$. Here, $X_0=0$ represents a black level and $X_{L-1}=1$ represents a white level.

The original discrete input level $\{X_0, X_1,..., X_{L-1}\}$ is quantized to Q discrete levels defined as $\{Z_0, Z_1,..., Z_{Q-1}\}$, where it is assumed that $Z_{Q-1}=X_{L-1}$, $Q \leq L$ and $\{Z_0, Z_1,..., Z_{Q-1}\} \subset \{X_0, X_1,..., X_{L-1}\}$.

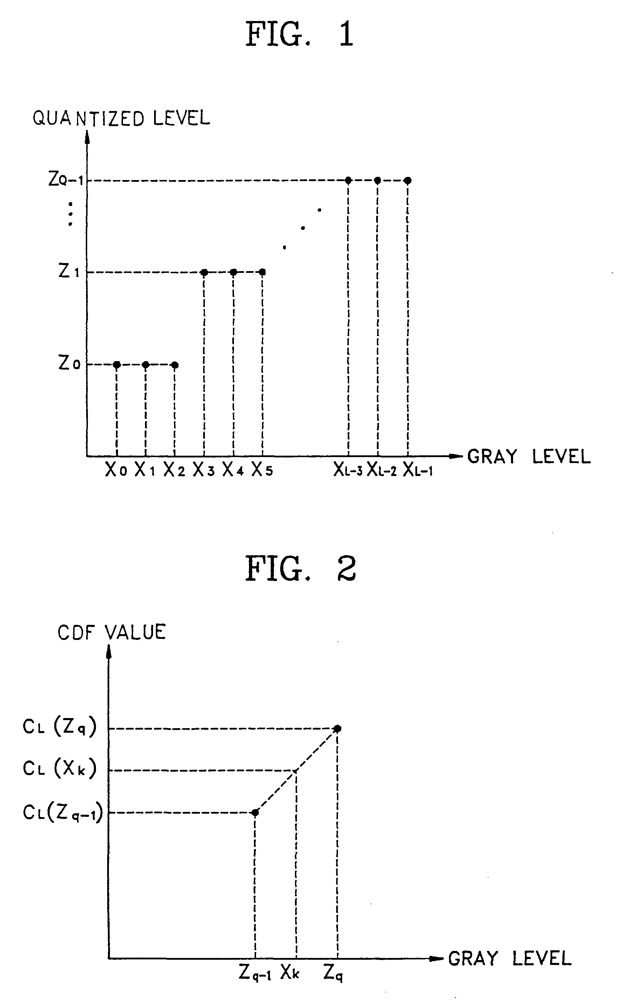

The example in which L level discrete signals are quantized to Q level discrete signals is illustrated in Figure 1.

$Q[X_k]$ represents a quantizing operation which is defined as follows.

$$Q[X_k]=Z_q, \qquad \text{if } Z_{q-1}<X_k \leq Z_q$$

Assuming that $\{Z\}=Q[\{X\}]$ and $Z_m=Q[X_m]$, $X_m$ represents the mean level of the original input image, $\{Z\}$ the quantized input image, and $Z_m$ the quantized mean level. The quantized input image $\{Z\}$ is split into two sub-images $\{Z\}_L$ and $\{Z\}_U$ according to $Z_m$. At this stage, all the samples of the quantized sub-image $\{Z\}_L$ are equal to or less than the quantized mean level $Z_m$ and all the samples of the quantized sub-image $\{Z\}_U$ are greater than the quantized mean level $Z_m$.

The quantized probability density function (PDF) of each sub-image $\{Z\}_L$ and $\{Z\}_U$ can be expressed as the following equations (1) and (2).

$$P_L(Z_q) = \frac{N_q^L}{N_L}, \qquad \text{for } Z_q \leq Z_m \tag{1}$$

$$P_U(Z_q) = \frac{N_q^U}{N_U}, \qquad \text{for } Z_q > Z_m \tag{2}$$

Here, $P_L(Z_q)$ is the probability of the q-th gray level $Z_q$ of the quantized sub-image $\{Z\}_L$, $P_U(Z_q)$ is the probability of the q-th gray level $Z_q$ of the quantized sub-image $\{Z\}_U$, $N_q^L$ and $N_q^U$ represent the respective numbers of times that the gray level $Z_q$ appears in quantized sub-images $\{Z\}_L$ and $\{Z\}_U$, respectively, and $N_L$ and $N_U$ represent the total numbers of pixels in the quantized sub-images $\{Z\}_L$ and $\{Z\}_U$, respectively.

Each cumulative density function (CDF) of the quantized sub-images $\{Z\}_L$ and $\{Z\}_U$ is defined as the following equations (3) and (4).

$$C_L(Z_q) = \sum_{j=0}^{q} P_L(Z_j), \qquad \text{for } Z_q \leq Z_m \qquad \ldots (3)$$

$$C_U(Z_q) = \sum_{j=m+1}^{q} P_U(Z_j), \qquad \text{for } Z_q > Z_m \qquad \ldots (4)$$

Here, $C_L(Z_m)=1$ and $C_U(Z_{Q-1})=1$.

Interpolated cumulative density function, $c_L(X_k)$ and $c_U(X_k)$ can be approximately calculated by a linear interpolation from $c_L(Z_q)$ and $c_U(Z_q)$. The linear interpolation is illustrated in Figure 2.

Assuming that $Q(X_k)=Z_q \leq Z_m$, $Z_{-1}=0$ and $c_L(X_k)$ is interpolated as shown by the following equation (5).

$$c_L(X_k) = C_L(Z_{q-1}) + \{C_L(Z_q) - C_L(Z_{q-1})\} \frac{X_k - Z_{q-1}}{Z_q - Z_{q-1}} \tag{5}$$

Similarly, assuming that $Q(X_k)=Z_q > Z_m$, $c_U(X_k)$ is interpolated as the following equation (6).

$$c_U(X_k)=C_U(Z_{q-1})+\{C_U(Z_q)-C_U(Z_{q-1})\}\frac{X_k - Z_{q-1}}{Z_q - Z_{q-1}} \qquad (6)$$

Finally, on the basis of the interpolated cumulative density function, the output Y of the proposed mean-separate histogram equalization (MSHE) with respect to the input image ($X_k$) is given as the following equation (7).

$$Y = \begin{cases} c_L(X_k) \, Z_m, & \text{if } X_k \leq Z_m \\ Z_m' + (X_{L-1} - Z_m') \, c_U(X_k), & \text{if } X_k > Z_m \end{cases} \qquad \cdots\cdots$$

$$(7)$$

Here $Z_m'=Z_m+X_{L-1}/(L-1)$ which is the next gray level after $Z_m$ at $\{X_0, X_1,..., X_{L-1}\}$.

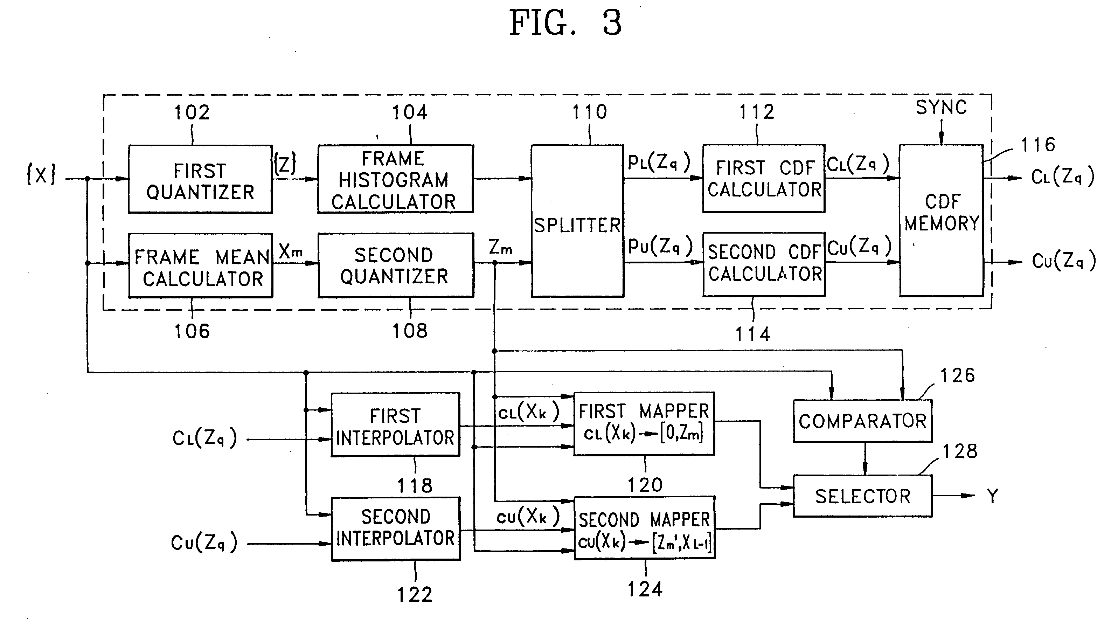

Next, a circuit for enhancing image using the quantized mean-separate histogram equalization (MSHE) will be described with reference to Figure 3.

Figure 3 shows the circuit for enhancing image using quantized mean-separate histogram equalization (MSHE).

Referring to Figure 3, a first quantizer 102 quantizes the input image {X} of L discrete levels to Q discrete levels, and outputs the quantized input image {Z}.

A frame histogram calculator 104 calculates the gray level distribution in a unit of a picture of the quantized input image signal {Z}. Here the picture unit can be a field, but in this embodiment it is a frame.

A frame mean calculator 106 calculates the mean level $X_m$ of the input image in a unit of a frame.

A second quantizer 108 quantizes the mean level $X_m$ of input image {X} and outputs the quantized mean level $Z_m$.

A splitter 110 splits the quantized gray level distribution which is calculated by frame histogram calculator 104 into the quantized sub-images $\{Z\}_L$ and $\{Z\}_U$ of a predetermined number(2 in this embodiment) based on the quantized mean level $Z_m$ output from quantizer 108, and outputs each probability density function of the quantized sub-image.

Here the probability density functions $P_L(Z_q)$ and $P_U(Z_q)$ are calculated using the above equations (1) and (2).

Here each sample of quantized sub-image $\{Z\}_L$ is equal to or less than the mean level $Z_m$ and each sample of the quantized sub-image $\{Z\}_U$ is greater than the mean level $Z_m$.

A first cumulative density function (CDF) calculator 112 receives the probability density function (PDF) of the quantized sub-image $\{Z\}_L$ including the quantized image sample being equal to or less than the quantized mean level $Z_m$ and calculates the cumulative density function (CDF) of the quantized sub-image $\{Z\}_L$ using equation (3).

A second cumulative density function (CDF) calculator 114 receives the probability density function (PDF) of the quantized sub-image $\{Z\}_U$ including the quantized image sample being greater than the quantized mean level $Z_m$ and calculates the cumulative density function (CDF) of the quantized sub-image $\{Z\}_U$ using equation (4).

A cumulative density function (CDF) memory 116 updates the cumulative density functions $C_L(Z_q)$ and $C_U(Z_q)$ of the quantized sub-images $\{Z\}_L$ and $\{Z\}_U$ calculated in first and second cumulative density function (CDF) calculators 112 and 114 according to the synchronous signal(SYNC) by the unit of a frame, and provides the prestored cumulative density function (CDF) to first and second interpolators 118 and 122 during the updating.

Here, if the unit of a picture is a field , the synchronous signal is a field synchronous signal, and if it is a frame, the synchronous signal is a frame synchronous signal. Also, the cumulative density function (CDF) memory is used as a buffer.

The first interpolator 118 receives the cumulative density function (CDF) of the quantized sub-image $\{Z\}_L$ and input sample $X_k$, and outputs an interpolated cumulative density function $C_L(X_k)$ which is linearly interpolated using equation (5).

A first mapper 120 receives the interpolated cumulative density function $C_L(X_k)$, input sample $X_k$, and quantized mean level $Z_m$ and maps the sample of sub-image $\{Z\}_L$ which has a level equal to or less than the quantized mean level $Z_m$ to the gray level of from 0 to $Z_m$ according to the interpolated cumulative density function $C_L(X_k)$.

The second interpolator 122 receives the cumulative density function (CDF) of the quantized sub-image $\{Z\}_U$ and input sample $X_k$, and outputs interpolated cumulative density function $C_U(X_k)$ which is linearly interpolated using equation (6).

A second mapper 124 receives the interpolated cumulative density function $C_U(X_k)$ input sample $X_k$, and

quantized mean level $Z_m$ and maps the sample of sub-image $\{Z\}_U$ which has a level greater than the quantized mean level $Z_m$ to the gray level of from $Z_m'$ to $X_{L-1}$ according to the interpolated cumulative density function $C_U(X_k)$. Here $Z_m'=Z_m+X_{L-1}/(L-1)$.

Meanwhile, the input sample $X_k$ applied to first and second interpolators 118 and 122 is the image signal of the next frame to compared cumulative density functions $C_L(Z_q)$ and $C_U(Z_q)$ calculated by first and second CDF calculators 112 and 116.

Therefore, the input sample applied to the first and second interpolators 118 and 122 can be applied after a delay of one frame. But by using the characteristic of a high correlation between the adjacent frames, it reduces the hardware to omit the frame memory.

A comparator 126 compares the input sample $X_k$ with the quantized mean level $Z_m$ output from the second quantizer 108, and outputs a selecting control signal which selects the output of the first mapper 120 if the input sample is equal to or less than the quantized mean level $Z_m$, otherwise selects the output of the second mapper 124.

The selected output, which is the equalized signal Y, is represented by equation (7).

The equalized signal Y enhances the contrast and preserves the entire brightness of the image.

The present invention has a wide application possibility for enhancing images in devices such as broadcasting equipment, radar signal processing system, and electronic home appliances as well as in the medical engineering field.

As described above, the method effectively reduces artifacts and the abrupt change of brightness generated during a conventional histogram equalization, to thereby enhance the contrast and preserve the entire brightness of the image.

Moreover, the circuit stores and accumulates only the number of times of the quantized levels by quantizing the input image signals, splitting the quantized input image signals into a predetermined number of a sub-image, and independently histogram-equalizing each sub-image. As a result, hardware is simplified and the manufacturing cost is reduced.

The reader's attention is directed to all papers and documents which are filed concurrently with or previous to this specification in connection with this application and which are open to public inspection with this specification.

The scope of the invention is not restricted to the details of the foregoing embodiment(s) but is limited only by the appended claims.

**Claims**

1. A method for enhancing image quality by histogram-equalizing image signals represented as a predetermined number of gray levels, said method comprising the steps of:

   (a) quantizing the L discrete gray levels of an input image (X) into Q discrete levels, where $Q \leq L$, and outputting quantized gray levels corresponding to quantized input image signals (Z);

   (b) calculating a quantized gray level distribution of the quantized input image signals by a unit of a picture (Z);

   (c) quantizing a mean of the gray levels of said input image signals (X) and outputting a quantized mean gray level ($Z_m$);

   (d) splitting the quantized gray level distribution of said quantized input image signals (Z) using said quantized mean gray level ($Z_m$), said splitting being mirrored by a corresponding splitting of the quantized input image signals (Z) into a pre-determined number of quantized sub-images;

   (e) computing, for each quantized sub-image, a separate cumulative density function CDF for the quantized gray levels of said quantized sub-image;

   (f) interpolating the values ( $C_L(Z_q), C_U(Z_q)$) of the CDF of each quantized sub-image to obtain interpolated values ($c_L(X_k), c_U(X_k)$) also for the gray levels of the sub-image of the input image corresponding to said quantized sub-image, said interpolating being based on said gray levels of said sub-image and on the values of said CDF;

   (g) independently performing histogram-equalization for each sub-image according to the values of the interpolated CDFs of the sub-images and outputting an enhanced image signal.

2. A method for enhancing an image according to claim 1, wherein said step (g) comprises the substeps of:

(g1) mapping each sample of a respective sub-image to gray levels according to the values obtained by applying the interpolated CDF of each sub-image to the gray level of said sample ($X_k$);

(g2) comparing the gray level of said sample ($X_k$) with said quantized mean gray level ($Z_m$) to determine the sub-image to which said sample belongs;

(g3) selecting, for each sample, one of the gray levels obtained in step (g1) according to the result of the comparison in step (g2).

3. A method for enhancing an image according to claim 1 or 2, wherein in said step (d) said input image signals are split into two sub-images according to the quantized mean level.

4. A method for enhancing an image according to claim 1 2 or 3, wherein in said step (f) said interpolation is linear.

5. A circuit for enhancing an image by histogram equalizing image signals represented as a predetermined number of gray levels, said circuit comprising:

first quantizing means (102) for quantizing the L discrete gray levels of input image signals (X) to Q discrete levels, where $Q \leq L$, and outputting quantized gray levels corresponding to quantized input image signals (Z);

first calculating means (104) for calculating a quantized gray level distribution of the quantized gray levels by a unit of a picture (Z);

second calculating means (106) for calculating the mean of the gray levels ($X_m$) of said input image signals by a unit of a picture (X);

second quantizing means (108) for quantizing said mean ($X_m$) and outputting a quantized mean gray level ($Z_m$);

third calculating means (110,112,114) for calculating, for each quantized sub-image, values ( $C_L(Z_q),C_U(Z_q)$) of a cumulative density function CDF of said quantized sub-image, said quantized sub-images resulting from splitting said quantized gray level distribution according to said quantized mean gray level ($Z_m$), said splitting being mirrored by a corresponding splitting of the quantized input image (Z) into a pre-determined number of quantized sub-images;

interpolating means (118,122) for interpolating the values ($C_L(Z_q),C_U(Z_q)$) of the CDF of each quantized sub-image to obtain interpolated values ($c_L(X_k),c_U(X_k)$) also for the gray levels of the sub-image of the input image (X) corresponding to said quantized sub-image, said interpolating being based on said gray levels of said sub-image and on the values of said CDF;

mapping means (120,124) for mapping each sample of the input image signals to gray levels based on the values ( $c_L(X_k),c_U(X_k)$) obtained by applying the interpolated CDF of each sub-image to the gray level of said sample ($X_k$);

outputting means (126,128) for outputting, for each sample of the input image signals, one histogram-equalized gray level (Y) selected among the gray levels obtained for said sample by the mapping means (120,124), according to the result of comparing said quantized mean gray level ($Z_m$) with the gray level of said sample ($X_k$) to determine the sub-image to which said sample belongs.

6. A circuit for enhancing an image according to claim 5, wherein said outputting means comprises:

a comparator (126) for comparing said quantized mean gray level (Zm) with said input image signals and outputting a selecting control signal; and

selector (128) for selecting one of the samples mapped to the gray level for each sub-image according to the selecting control signal.

7. A circuit for enhancing an image according to claim 5 or 6, wherein said third calculating means comprises a buffer (116) for updating the cumulative density function value for each quantized sub-image by a unit of a picture and providing a prestored cumulative density function value to said interpolating means during updating.

8. A circuit for enhancing an image according to claim 5, 6 or 7, further comprising a picture memory for delaying said input image signals by a unit of one picture so as to input to said interpolating means image signals of the same picture where said cumulative density function value is calculated in said third calculating means.

9. A circuit for enhancing an image according to claim 5, 6, 7 or 8, wherein said picture unit is a frame and said predetermined number is 2.

10. A circuit for enhancing an image according to claim 5, 6, 7, 8 or 9 wherein said interpolation is linear.


**Patentansprüche**

1. Ein Verfahren zur Verbesserung von Bildqualität durch Histogrammausgleich von Bildsignalen, dargestellt durch eine vorher bestimmte Anzahl an Graustufen, wobei das Verfahren folgende Schritte umfasst:

   (a) Quantisierung der L diskreten Graustufen eines Eingabebildes (X) in Q diskrete Stufen, mit $Q \leq L$ und Ausgabe von quantisierten Graustufen entsprechend quantisierter Eingabe-Bildsignale (Z);

   (b) Berechnung einer quantisierten Graustufenverteilung der quantisierten Eingabe-Bildsignale in einer Einheit von einem Bild (Z);

   (c) Quantisierung eines Mittelwertes der Graustufen der Eingabe-Bildsignale (X) und Ausgabe einer quantisierten Mittelwert-Graustufe ($Z_m$);

   (d) Auftrennung der quantisierten Graustufenverteilung der quantisierten Eingabe-Bildsignale (Z) unter Verwendung der quantisierten Mittelwert-Graustufe ($Z_m$), wobei die Auftrennung durch eine entsprechende Auftrennung der quantisierten Eingabe-Bildsignale (Z) in eine vorher bestimmte Anzahl von quantisierten Teilbildem wiedergespiegelt wird;

   (e) Berechnung einer separaten akkumulierten Dichtefunktion CDF für die quantisierten Graustufen des quantisierten Teilbildes für jedes quantisierte Teilbild;

   (f) Interpolation der Werte ($C_L (Z_q)$, CU ($Z_q$)) der CDF von jedem quantisierten Teilbild, um interpolierte Werte ($c_L (X_k)$, $c_U (X_k)$) auch für die Graustufen des Teilbildes des Eingabebildes entsprechenden dem quantisierten Teilbild zu erhalten, wobei die Interpolation auf den Graustufen des Teilbildes und auf den Werten der CDF basiert;

   (g) unabhängige Ausführung eines Histogrammausgleichs für jedes Teilbild entsprechend den Werten der interpolierten CDF's der Teilbilder und Ausgabe eines verbesserten Bildsignals.

2. Ein Verfahren zur Verbesserung eines Bildes entsprechend Anspruch 1, wobei der Schritt (g) folgende Teilschritte umfasst:

   (g1) Zuordnung von jedem Probenwert eines jeweiligen Teilbildes zu Graustufen entsprechend den Werten, die durch Anwendung der interpolierten CDF von jedem Teilbild auf die Graustufe des Probenwertes ($X_k$) erhalten werden;

   (g2) Vergleich der Graustufe des Probenwertes ($X_k$) mit der quantisierten Mittelwert-Graustufe ($Z_m$), um das Teilbild zu bestimmen, zu dem der Probenwert gehört;

   (g3) Auswahl von einer der Graustufen, die in Schritt (g1) erhalten wurden entsprechend dem Ergebnis des Vergleichs in Schritt (g2) für jeden Probenwert.

3. Ein Verfahren zur Verbesserung eines Bildes entsprechend Anspruch 1 oder 2, wobei in dem Schritt (d) die Eingabe-Bildsignale aufgetrennt werden in zwei Teilbilder entsprechend dem quantisierten Mittelwert-Level.

4. Ein Verfahren zur Verbesserung eines Bildes entsprechend Anspruch 1, 2 oder 3, wobei die Interpolation in dem Schritt (f) linear ist.

5. Eine Schaltungsanordnung zur Verbesserung eines Bildes durch Histogrammausgleich von Bildsignalen, dargestellt durch eine vorher bestimmte Anzahl an Graustufen, wobei die Schaltungsanordnung umfasst:

Eine erste Quantisierungsvorrichtung (102) zur Quantisierung der L diskreten Graustufen von Eingabe-Bildsignalen (X) in Q diskrete Stufen, mit $Q \leq L$ und Ausgabe von quantisierten Graustufen entsprechend quantisierter Eingabe-Bildsignale (Z);

eine erste Berechnungsvorrichtung (104) zur Berechnung einer quantisierten Graustufenverteilung der quantisierten Graustufen in einer Einheit von einem Bild (Z);

eine zweite Berechnungsvorrichtung (106) zur Berechnung des Mittelwerts der Graustufen ($X_m$) der Eingabebildsignale in einer Einheit von einem Bild (X);

eine zweite Quantisierungsvonrichtung (108) zur Quantisierung des Mittelwerts ($X_m$) und Ausgabe einer quantisierten Mittelwert-Graustufe ($Z_m$);

dritte Berechnungsvorrichtungen (110,112,114) zur Berechnung von Werten ($C_L (Z_q)$, $C_U (Z_q)$) einer akkumulierten Dichtefunktion CDF des quantisierten Teilbildes für jedes quantisierte teilbild, wobei die quantisierten Teilbilder aus einer Auftrennung der quantisierten Graustufenverteilung entsprechend der quantisierten Mittelwertgraustufe ($Z_m$) resultieren, wobei die Auftrennung durch eine entsprechende Auftrennung des quantisierten Eingabebildes (Z) in eine vorher bestimmte Anzahl von quantisierten Teilbildem wiedergespiegelt wird;

Interpolationsvorrichtungen (118,122) zur Interpolation der Werte ($C_L (Z_q)$, $C_U (Z_q)$) der CDF für jedes quantisierte Teilbild, um interpolierte Werte ($c_L (X_k)$, $c_U (X_k)$) auch für die Graustufen des Teilbildes des Eingabebildes (X) entsprechend dem quantisierten Teilbild zu erhalten, wobei die Interpolation auf den Graustufen des Teilbildes und auf den Werten der CDF basiert;

Zuordnungsvorrichtungen (120,124) zur Zuordnung eines jeden Probenwertes der Eingabe-Bildsignale zu Graustufen, die auf den Werten ($c_L (X_k)$, $c_U (X_k)$) basieren, die durch Anwendung der interpolierten CDF eines jeden Teilbildes auf die Graustufe des Probenwertes ($X_k$) erhalten werden;

Ausgabevorrichtungen (126,128) zur Ausgabe einer histogrammausgeglichenen Graustufe (Y) für jeden Probenwert der Eingabe-Bildsignale, ausgewählt unter den Graustufen, die für den Probenwert durch die Zuordnungsvorrichtungen (120,124) erhalten wurden, entsprechend dem Ergebnis des Vergleichs der quantisierten Mittelwert-Graustufe ($Z_m$) mit der Graustufe des Probenwertes ($X_k$), um das Teilbild zu bestimmen zu dem der Probenwert gehört.

6. Eine Schaltungsanordnung zur Verbesserung eines Bildes entsprechend Anspruch 5, wobei die Ausgabevorrichtung umfasst:

Einen Vergleicher (126) zum Vergleich der quantisierten Mittelwert-Graustufe ($Z_m$) mit den Eingabe-Bildsignalen und Ausgabe eines Auswahl-Kontrollsignals; und

einen Selektor (128) zur Auswahl eines der Probenwerte, welcher der Graustufe für jedes Teilbild entsprechend dem Auswahl-Kontrollsignal zugeordnet ist.

7. Eine Schaltungsanordnung zur Verbesserung eines Bildes entsprechend Anspruch 5 oder 6, wobei die dritte Berechnungsvorrichtung einen Zwischenspeicher (116) zur Aktualisierung des akkumulierten Dichtefunktionswertes für jedes quantisierte Teilbild in einer Einheit von einem Bild und zur Lieferung eines vorher gespeicherten akkumulierten Dichtefunktionwertes an die Interpolationsvorrichtung während der Aktualisierung umfasst.

8. Eine Schaltungsanordnung zur Verbesserung eines Bildes entsprechend Anspruch 5, 6 oder 7, die weiterhin einen Bildspeicher zur Verzögerung der Eingabe-Bildsignale in einer Einheit von einem Bild umfasst, um in die Interpolationvorrichtung Bildsignale des selben Bildes einzugeben, wobei der akkumulierte Dichtefunktionswert in der dritten Berechnungsvorrichtung berechnet wird.

**9.** Eine Schaltungsanordnung zur Verbesserung eines Bildes entsprechend Anspruch 5, 6,7 oder 8, wobei die Bildeinheit ein Bild ist und die vorher bestimmte Anzahl 2.

**10.** Eine Schaltungsanordnung zur Verbesserung eines Bildes entsprechend Anspruch 5, 6, 7, 8 oder 9, wobei die Interpolation linear ist.

**Revendications**

**1.** Procédé pour améliorer une qualité d'image en effectuant une égalisation d'histogramme de signaux d'image représentés sous la forma d'un nombre prédéterminé de niveaux de gris, ledit procédé comportant les étapes consistant à :

(a) quantifier les L niveaux de gris discrets d'une image d'entrée **(X)** en Q niveaux discrets, où $Q \leq L$, et délivrer en sortie des niveaux de gris quantifiés correspondant à des signaux d'image d'entrée quantifiés (Z),
(b) calculer une distribution de niveaux de gris quantifiés des signaux d'image d'entrée quantifiés par une unité d'une image (Z),
(c) quantifier une moyenne des niveaux de gris desdits signaux d'image d'entrée (X) et délivrer en sortie un niveau de gris moyen quantifié $(Z_m)$,
(d) diviser la distribution de niveaux de gris quantifiés desdits signaux d'image d'entrée quantifiés (Z) en utilisant ledit niveau de gris moyen quantifié $(Z_m)$, ladite division étant reflétée par une division correspondante des signaux d'image d'entrée quantifiés (Z) en un nombre prédéterminé de sous-images quantifiées,
(e) calculer, pour chaque sous-image quantifiée, une fonction de densité cumulée séparée CDF pour les niveaux de gris quantifiés desdites sous-images quantifiées,
(f) interpoler les valeurs $(C_L(Z_q), C_U(Z_q))$ de la fonction CDF de chaque sous-image quantifiée pour obtenir des valeurs interpolées $(C_L(X_k), C_U(X_k))$ également pour les niveaux de gris de la sous-image de l'image d'entrée correspondant à ladite sous-image quantifiée, ladite interpolation étant basée sur lesdits niveaux de gris de ladite sous-image et sur les valeurs de ladite fonction CDF,
(g) effectuer d'une manière indépendante une égalisation d'histogramme pour chaque sous-image conformément aux valeurs des fonctions CDF interpolées des sous-images et délivrer en sortie un signal d'image amélioré.

**2.** Procédé pour améliorer une image selon la revendication 1, dans lequel ladite étape (g) comporte les sous-étapes consistant à :

(g1) mapper chaque échantillon d'une sous-image respective en niveaux de gris conformément aux valeurs obtenues en appliquant la fonction CDF interpolée de chaque sous-image au niveau de gris dudit échantillon $(X_k)$,
(g2) comparer le niveau de gris dudit échantillon $(X_k)$ audit niveau de gris moyen quantifié $(Z_m)$ pour déterminer la sous-image à laquelle appartient ledit échantillon,
(g3) sélectionner, pour chaque échantillon, l'un des niveaux de gris obtenus à l'étape (g1) en fonction du résultat de la comparaison à l'étape (g2).

**3.** Procédé pour améliorer une image selon la revendication 1 ou 2, dans lequel à ladite étape (d), lesdits signaux d'image d'entrée sont divisés en deux sous-images conformément au niveau moyen quantifié.

**4.** Procédé pour améliorer une image selon la revendication 1, 2 ou 3, dans lequel, à ladite étape (f) ladite interpolation est linéaire.

**5.** Circuit pour améliorer une image en effectuant une égalisation d'histogramme des signaux d'image représentés sous la forma d'un nombre prédéterminé de niveaux de gris, ledit circuit comportant :

des premiers moyens de quantification (102) pour quantifier les L niveaux de gris discrets de signaux d'image d'entrée (X) en Q niveaux discrets, où $Q \leq L$, et délivrer en sortie des niveaux de gris quantifiés correspondant à des signaux d'image d'entrée quantifiés (Z),
des premiers moyens de calcul (104) pour calculer une distribution de niveaux de gris quantifiés des niveaux de gris quantifiés par une unité d'une image (Z),
des deuxièmes moyens de calcul (106) pour calculer la moyenne des niveaux de gris $(X_m)$ desdits signaux

d'image d'entrée par une unité d'une image (X),

des seconds moyens de quantification (108) pour quantifier ladite moyenne ($X_m$) et délivrer en sortie un niveau de gris moyen quantifié ($Z_m$),

des troisièmes moyens de calcul (110, 112, 114) pour calculer, pour chaque sous-image quantifiée, des valeurs ($C_L(Z_q)$, $C_U(Z_q)$) d'une fonction de densité cumulée CDF de ladite sous-image quantifiée, lesdites sous-images quantifiées résultant de la division de ladite distribution de niveaux de gris quantifiés conformément audit niveau de gris moyen quantifié ($Z_m$), ladite division étant reflétée par une division correspondante de l'image d'entrée quantifiée (Z) en un nombre prédéterminée de sous-images quantifiées,

des moyens d'interpolation (118, 122) pour interpoler les valeurs ($C_L(Z_q)$, $C_U(Z_q)$) de la fonction CDF de chaque sous-image quantifiée afin d'obtenir les valeurs interpolées ($C_L(X_k)$, $C_U(X_k)$) également pour les niveaux de gris de la sous-image de l'imag d'entrée (X) correspondant à ladite sous-image quantifiée, ladite interpolation étant batée sur lesdits niveaux de gris de ladite sous-image et sur les valeurs de ladite fonction CDF,

des moyens de mappage (120, 124) pour mapper chaque échantillon des signaux d'image d'entrée en niveaux de gris sur la base des valeurs ($C_L(X_k)$, $C_U(X_k)$) obtenues en appliquant la fonction CDF interpolée de chaque sous-image au niveau de gris dudit échantillon ($X_k$),

des moyens de sortie (126, 128) pour délivrer en sortie, pour chaque échantillon des signaux d'image d'entrée, un niveau de gris à histogramme égalisé (Y) sélectionné parmi les niveaux de gris obtenus pour ledit échantillon par lesdits moyens de mappage (120, 124), en fonction du résultat de comparaison dudit niveau de gris moyen quantifié ($Z_m$) au niveau de gris dudit échantillon ($X_k$) pour déterminer la sous-image à laquelle appartient ledit échantillon.

6. Circuit pour améliorer une image selon la revendication 5, dans lequel lesdits moyens de sortie comportent :

un comparateur (126) pour comparer ledit niveau de gris moyen quantifié ($Z_m$) auxdits signaux d'image d'entrée et délivrer en sortie un signal de commande de sélection, et

un sélecteur (128) pour sélectionner l'un des échantillons mappés en un niveau de gris pour chaque sous-image en fonction du signal de commands de sélection.

7. Circuit pour améliorer une image selon la revendication 5 ou 6, dans lequel lesdits troisièmes moyens de calcul comportent un tampon (116) pour mettre à jour la valeur de la fonction de densité cumulée pour chaque sous-image quantifiée par une unité d'une image et fournir une valeur de la fonction de densité cumulée préalablement mémorisée auxdits moyens d'interpolation durant la mise à jour.

8. Circuit pour améliorer une image selon la revendication 5, 6 ou 7, comportant en outre une mémoire d'images pour retarder lesdits signaux d'image d'entrée d'une unité d'une seule image de manière à délivrer en entrée auxdits moyens d'interpolation des signaux d'image de la même image où ladite valeur de la fonction de densité cumulée est calculée dans lesdits troisièmes moyens de calcul.

9. Circuit pour améliorer une image selon la revendication 5, 6, 7 ou 8, dans lequel ladite unité d'image est une image complète et ledit nombre prédéterminé est égal à 2.

10. Circuit pour améliorer une image selon la revendication 5, 6, 7, 8 ou 9, dans lequel ladite interpolation est linéaire.

# FIG. 1

# FIG. 2

## FIG. 3